# EUROPEAN PATENT SPECIFICATION

(11) **EP 2 921 332 B1**
(45) Date of publication and mention of the grant of the patent: **28.06.2017**
(21) Application number: 14160670.7
(22) Date of filing: 19.03.2014
(51) Int. Cl.: B60K 6/448, B60K 6/52, B60G 3/14

(54) **Drive train for an all-terrain vehicle**
Antriebsstrang für ein Geländefahrzeug
Chaîne cinématique pour véhicule tout-terrain

(43) Date of publication of application: 23.09.2015
(73) Proprietor: Le Moteur Moderne SAS, 91127 Palaiseau Cedex (FR)
(72) Inventor: Enjalbert, Eric, 91640 Briis-sous-Forges (FR); Rosenstiehl, Vincent, 91400 Orsay (FR)
(74) Representative: Babeluk, Michael

(56) References cited:
- EP-A1- 2 565 068
- GB-A- 875 691
- US-A- 4 795 222
- US-A- 5 401 218
- US-A1- 2005 205 329
- US-A1- 2008 121 448

## Description

The invention relates to a drive train for an all-terrain vehicle, with two primary wheels rotating around a primary axis and two secondary wheels rotating around a secondary axis, wherein the primary wheels are drivingly connected to a thermal engine, and wherein at least two wheels arranged on a first side of the vehicle are synchronized by a first wheel train and at least two wheels arranged on a second side of the vehicle are synchronized by a second wheel train, with a first electric machine being drivingly connected to the first wheel train and a second electric machine being connected to the second wheel train.

All terrain vehicle with two wheel sets arranged parallel to each other by synchronous driven wheels result in very high all terrain capabilities but are bringing a drawback with them in term of steering. The steering of the vehicle, when done only with brakes - the way it is often done on chain driven vehicles - results in high loses. EP-A-2 565 068 discloses a drive train according to the preamble of claim 1. The document EP 1 911 622 A1 describes a drive train for a track vehicle comprising an internal combustion engine, two electric motors and a generator, wherein the combustion engine and the electric motors are drivingly connected to the wheels of the same primary axis. The drive train comprises three planetary gears with a first transmission gear being arranged between the combustion engine and the primary axis, a second planetary gear located between the primary axis and a first wheel and a third planetary gear located between the primary axis and a second wheel of the axis. The first electric motor is drivingly connected to the second planetary gear and the second motor is connected to the third planetary gear. Due to the large number of planetary gears the drive train is very complex and expensive.

The patent US 7,748,488 B2 discloses a steering system for an agricultural or industrial utility vehicle, wherein an electric drive is provided for each half of a front axis of the utility vehicle. The electric vehicle can be driven by at least one wheel associated with the each axis half. The wheels associated with a rear axis can be driven by a mechanical drive of the utility vehicle.

The DE 10 2020 045 502 A1 discloses a device with a differential gear or a deflection gear being arranged in a drive train between a combustion engine and front and rear wheels. Electrical machines are arranged between the differential gear or deflection gear and one of the wheels. Controllable clutches are located between the differential gear or deflection gear and the electrical machines.

The document EP 2 366 604 A1 describes an all terrain passanger vehicle. The passenger vehicle has a chassis, which has two driven crawler chains arranged parallel to each other or two wheel sets arranged parallel to each other by synchronous driven wheels. A steering unit controls the electric motors only below a critical speed of the passenger vehicle on certain torques and above the critical speed on certain rotational speed. A battery or an electrical output is connected as buffer between a generator and the electric motors.

EP 1 693 232 A1 discloses an all-terrain amphibian vehicle. The vehicle has left axiss and right axiss arranged to drive a vehicle both in land and in water, and two three phase electric motors for driving left and right axiss. A movable control lever provides a control signal according to the position of the axiss. An electronic casing synchronizes the two electric motors according to the control signal.

It is the subject of the invention to improve steering of an all-terrain vehicle.

This is achieved in accordance with the features of claim 1, with the thermal engine is drivingly connected to the primary wheels via a single differential gear, wherein preferably two secondary wheels of a secondary axis are drivingly connected each to a first electric machine and a second electric machine, respectively.

In contrast to EP 1 911 622 A1 the drive train according to the present invention doesn't need any planetary gear. Instead of two planetary gears the inventive drive train comprises only one simple differential gear. So torque vectoring may be accomplished in a very simple and cost-efficient way.

The secondary axis is located parallel to and distant from the primary axis.

The front and rear wheels of the same side of the vehicle are coupled and form a wheel train. The front and rear wheels of each side are rotating at the same speed.

The inventive drive train comprises a mechanical traction path and an electric traction path.

The mechanical traction path includes at least the thermal engine - e.g., an internal combustion engine - and a differential gear connected to each side wheel train of the vehicle, wherein the thermal engine is drivingly connected to the wheels of the primary drive via the differential gear. The gear transmission is arranged between the thermal engine and differential gear. The gear transmission can be either a gearbox or a continuous variable transmission.

The electric traction path including two electric machines enables electric traction, vehicle steering, energy recuperation and braking, wherein each electric machine is connected to one side wheel train of the vehicle. According to the invention a first clutch is located between the thermal engine and the gear transmission. A second clutch is arranged between the transmission gear and the differential gear.

By opening the second clutch it is possible to drive the vehicle in only-electric mode not having to cope with the friction losses of the thermal engine and of the gear transmission. It is also possible to recharge the battery through the two side electric machines in braking phase without thermal engine losses. With opening both clutches the vehicle can be driven electrtically in a serial hybrid mode, not having to cope with the friction losses of the gear transmission.

The control of the vehicle trajectory is achieved through an appropriate control of both individual electric machines (coupled in thermal traction mode to the control of the thermal engine) through speeding up or down the wheel trains of the vehicle. For speeding up a wheel train, the corresponding electric machine will work as a motor and accelerate it. For speeding down a wheel train the corresponding electric machine will work as a generator and brake it. The radius of the trajectory is the result of the speed difference between the left and the right wheel trains.

When the traction conditions become different between both side wheel trains, it is key to keep control on trajectory and satisfy the trajectory request. The electric machines keep under control the speed difference required by the trajectory request in order to stay on the targeted trajectory independently from the left-right or front-rear difference of traction conditions even if the vehicle is a wheel vehicle.

The inventive architecture is efficient in term of energy consumption. The current generated by the braking machine working as a generator is used in the other electric machine (power transfer) in the most appropriate way. So that the required traction power is taken out of the battery in electric mode, out of the thermal engine in thermal mode or combination of both in some mix cases.

The control system of this hybrid drivetrain is continuously adjusting speed and torque on each electric machine in order to satisfy the required vehicle speed and the targeted trajectory, following the delivered power by the thermal engine and the actual tractions conditions of each wheel train.

In normal operation of the vehicle, the thermal engine is supplying most of the power moving the vehicle. The electric traction machines are complementing (boost), steering and guaranteeing optimized traction.

In deceleration mode of the vehicle, the electric machines are working as generators. They brake the vehicle and charge the battery with generated current.

Other embedded capabilities of this architecture:
Pure electric traction at lowered speed with shut down thermal engine for stealth operation: This architecture allows also stealth operation. The thermal engine is shut down. The clutch is disengaged. The vehicle is moved at reduced speed by the electrical motors. This is a pure electric traction.

Very sharp curves capability, up to pivoting: Depending on the power of the chosen electric machines, the capability of power transfer from one side to the other of the vehicle will vary. The achievable trajectory curve radius is a result of the vehicle speed and of the power transfer. At low vehicle speed, very sharp curves are feasible. At zero speed pivoting is feasible.

Preferably the drive train comprises an additional alternator being connected with the thermal engine. In this way the drive train can be used as gen set to recharge the battery, with the first or second clutch being opened. Further the traction and braking capabilities of the side electric machines can be supplemented by said alternator in case their full load capabilities are reached.

On top of a four wheel architecture also other architectures with one (six wheels) or two (eight wheels) or more additional axiss added between the front and the rear axiss are possible. So Each wheel train comprises at least two wheels, preferably at least three wheels, more preferably at least four wheels.

The invention will be explained below in closer detail by reference to the schematic drawings, wherein:
- Fig. 1: shows a drive train in accordance to the present invention in a first embodiment;
- Fig. 2: shows a chassis of an all terrain vehicle; and
- Fig. 3: shows a drive train in accordance to the present invention in a second embodiment.

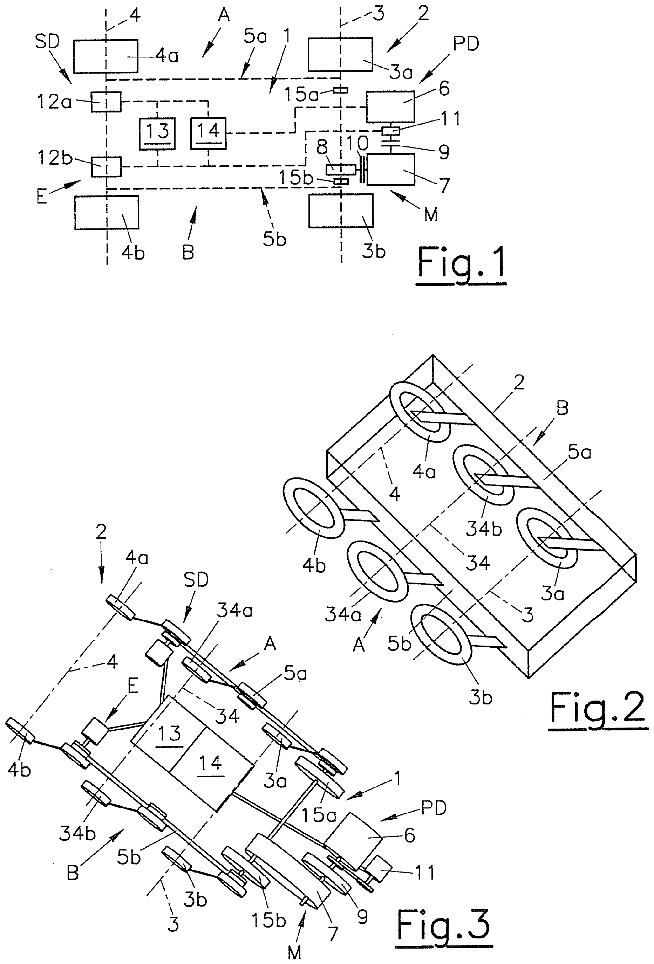

Fig. 1 shows a drive train 1 for an all-terrain vehicle 2 with a primary axis 3 and a secondary axis 4, each of the axis 3, 4 having two primary wheels 3a, 3b and two secondary wheels 4a, 4b arranged on opposite sides A, B of the vehicle 2. The all-terrain vehicle 2 may be a wheel vehicle or a track vehicle.

All wheels 3a, 4a, of a first side A of the vehicle 2 are synchronized by a first wheel train 5a. The wheels 3b, 4b of a second side B are synchronized by a second wheel train 5b. So the front wheels - for example the wheels 3a, 3b of the primary axis 3, and the rear wheels - for example the wheels 4a, 4b of the secondary axis 4 - of each side A, B are rotating at the same speed. The synchronisation of the wheels 3a, 4a; 3b, 4b of each wheel train 5a; 5b can be realized by traction drives, e.g., chain drives, or gears.

The primary wheels 3a, 3b of the primary axis 3 are driven directly by a thermal engine 6, for example an internal combustion engine, wherein there is arranged a gear transmission 7 and a differential gear 8 in the mechanical transmission path M between thermal engine 6 and the wheels 3a, 3b of the primary axis 3. A first clutch 9 is located between thermal engine and 6 gear transmission 7, a second clutch 10 between gear transmission 7 and differential gear 8. An alternator 11 is connected to the thermal engine 6.

A spur gear differential which is used regularly as axle gear is used as differential gear 8.

The first and second wheels 4a, 4b are arranged on the secondary axis 4, being drivingly connected directly to a first electric machine 12a and a second electric machine 12b, respectively, wherein the first electric machine 12a is drivingly connected to the first wheel train 5a and the second electric machine 12b is connected to the second wheel train 5b.

The electric machines 12a, 12b and the alternator 11 are electrically connected to a electric battery 13. An electronic control unit 14 is connected to the thermal engine, the alternator and the electric machines.

Each of the drive train shown in Fig. 1 to 3 comprise a mechanical traction path M and an electric traction path E.

The mechanical traction path M forming a primary drive PD includes the thermal engine 6, the gear transmission 7 and the differential gear 8 connected to each side wheel train 5a, 5b of the vehicle 2, wherein the thermal engine 6 is drivingly connected to the primary wheels 3a, 3b of the primary drive PD via the differential gear 8. The gear transmission 7 is arranged between the thermal engine 6 and differential gear 7. The gear transmission 7 can be either a gearbox or a continuous variable transmission.

The electric traction path E forming a secondary drive SD includes the two electric machines 12a, 12b. The electric traction path E enables electric traction, vehicle steering, energy recuperation and braking, wherein each electric machine 12a, 12b is connected to one side wheel train 5a, 5b of the vehicle 2.

Different types of transmission can be enabled with the first clutch 9, 10 being located between the thermal engine 6 and the gear transmission 7 and/or the a second clutch 10 being arranged between the transmission gear 7 and the differential gear 8.

With the first clutch 9 and/or the second clutch 10 being opened it is possible to drive the vehicle 2 in only-electric mode not having to cope with the friction losses of the thermal engine 6 and of the gear transmission 7. It is also possible to recharge the battery 13 through the two side electric machines 12a, 12b in braking phases without thermal engine losses.

The control of the vehicle traction and of the vehicle trajectory is provided by the electric machines 12a, 12b and the battery 13.

In detail the control of the vehicle trajectory is achieved by an electronic control unit through an appropriate control of both individual electric machines 12a, 12b (coupled in thermal traction mode to the electronic control unit 14 of the thermal engine 6) through speeding up or down the wheel trains 5a, 5b of the vehicle 2. For speeding up a wheel train5a, 5b, the corresponding electric machine 12a, 12b will work as a motor and accelerate it. For speeding down a wheel train 5a, 5b the corresponding electric machine 12a, 12b will work as a generator and brake it. The radius of the trajectory is the result of the speed difference between the left and the right wheel trains 5a, 5b.

The power required on each side electric machine 12a, 12b, in particular speed and torque, is determined by the electronic control unit 14 following required vehicle speed, targeted trajectory curve radius, delivered power of the engine and actual traction conditions on each vehicle side A, B. The electronic controll unit 14 of this hybrid drivetrain is continuously adjusting speed and torque on each electric machine 12a, 12b in order to satisfy the required vehicle speed and the targeted trajectory, following the delivered power by the thermal engine 6 and the actual tractions conditions of each wheel train 5a, 5b.

When the traction conditions become different between both side A, B wheel trains 5a, 5b, it is important to keep control on trajectory and satisfy the trajectory request. The electric machines 12a, 12b keep under control the speed difference required by the trajectory request in order to stay on the targeted trajectory independently from the left-right or front-rear difference of traction conditions even if the vehicle 2 is a wheel vehicle.

The described architecture is efficient in term of energy consumption. The current generated by the braking electric machine 12a; 12b working as a generator is used in the other electric machine 12b; 12a (power transfer) in the most appropriate way. In this way the required traction power is taken out of the battery 13 in electric mode, out of the thermal engine 6 in thermal mode or combination of both in some mix cases.

In normal operation of the vehicle 2, the thermal engine 6 is supplying most of the power moving the vehicle 2. The electric traction machines 12a, 12b are complementing (boost), steering and guaranteeing optimized traction.

In deceleration mode of the vehicle 2, the electric machines 12a, 12b are working as generators in recuperation. They brake the vehicle 2 and charge the battery 13 with generated current.

Auxiliary mechanical brakes 15a, 15b can be actuated for trajectory or braking purposes, dependent on the state of charge of the batterie 13.

Other embedded capabilities of this architecture are as follows:
- Pure electric traction at lowered speed with shut down thermal engine 6 for stealth operation: At least one of the clutches 9, 11 is disengaged. The vehicle 2 is moved at reduced speed by the electrical machines 12a, 12b. This is a pure electric traction.
- Very sharp curves capability, up to pivoting: Depending on the power of the chosen electric machines 12a, 12b, the capability of power transfer from one side A; B to the other B; A of the vehicle 2 will vary. The achievable trajectory curve radius is a result of the vehicle speed and of the power transfer. At low vehicle speed, very sharp curves are feasible. At zero speed pivoting is feasible.
- Gen set: Preferably the drive train 1 comprises an additional alternator 11 being connected with the thermal engine 6. In this way the drive train 1 can be used as gen set to recharge the battery 13, with the first or second clutch 9, 10 being opened. Further the traction and braking capabilities of the side electric machines 12a, 12b can be supplemented by said alternator 11 in case their full load capabilities are reached.

The Fig. 2 and 3 show a second embodiement of the invention with an all-terrain vehicle 2 comprising six wheels, i.e. primary wheels 3a, 3b, secondary wheels 4a, 4b and a pair of auxiliary wheels 34a, 34b rotating around an auxiliary axis 34. Each of the first and second wheel trains 5a; 5b comprises three wheels 3a, 34a, 4a; 3b, 34b, 4b.

## Claims

1. Drive train (1) for an all-terrain vehicle (2), with two primary wheels (3a, 3b) rotating around a primary axis (3) and two secondary wheels (4a, 4b) rotating around a secondary axis (4), wherein the primary wheels (3a, 3b) are drivingly connected to a thermal engine (6), and wherein at least two wheels (3a, 4a) arranged on a first side (A) of the vehicle (2) are synchronized by a first wheel train (5a) and at least two wheels (3b, 4b) arranged on a second side (B) of the vehicle (2) are synchronized by a second wheel train (5b), with a first electric machine (12a) being drivingly connected to the first wheel train (5a) and a second electric machine (12b) being connected to the second wheel train (5b), wherein the thermal engine (6) is drivingly connected to the primary wheels (3a, 3b) via a single differential gear (8) **characterised in that** a transmission gear (7) is arranged between the thermal engine (6) and differential gear (8), wherein a first clutch (9) is located between the thermal engine (6) and the transmission gear (7), and wherein a second clutch (10) is arranged between the transmission gear (7) and the differential gear (8).

2. Drive train (1) according to claim 1, **characterised in that** two secondary wheels (4a, 4b) rotating around the secondary axis (4) are drivingly connected each to a first electric machine (12a) and a second electric machine (12b), respectively.

3. Drive train (1) according to claim 1 or 2, **characterised in that** a mechanical traction path (M) comprising the thermal engine (6) and the differential gear (8) is connected to each side wheel train (5a, 5b) of the vehicle (2).

4. Drive train (1) according to on the claims 1 to 3, **characterised in that** an electric traction path (E) comprises the first electric machine (12a) being connected to the first wheel train (5a) and the second electric machine (12b) being connected to the second wheel train (5b).

5. Drive train (1) according to on the claims 1 to 4, **characterised in that** each wheel train (5a, 5b) comprises at least two wheels (3a, 4a; 3b, 4b), preferably at least three wheels (3a, 34a 4a; 3b, 34b, 4b), more preferably at least four wheels.

## Patentansprüche

1. Antriebsstrang (1) für ein Geländefahrzeug (2) mit zwei um eine Primärachse (3) umlaufenden Primärrädern (3a, 3b) und zwei um eine Sekundärachse (4) umlaufenden Sekundärrädern (4a, 4b), wobei die Primärräder (3a, 3b) antriebsmäßig mit einer Wärmekraftmaschine (6) verbunden sind und wobei mindestens zwei auf einer ersten Seite (A) des Fahrzeugs (2) angeordnete Räder (3a, 4a) durch einen ersten Radstrang (5a) synchronisiert sind und mindestens zwei auf einer zweiten Seite (B) des Fahrzeugs (2) angeordnete Räder (3b, 4b) durch einen zweiten Radstrang (5b) synchronisiert sind, mit einer ersten elektrischen Maschine (12a), die antriebsmäßig mit dem ersten Radstrang (5a) verbunden ist, und einer zweiten elektrische Maschine (12b), die mit dem zweiten Radstrang (5b) verbunden ist, wobei die Wärmekraftmaschine (6) mit den Primärrädern (3a, 3b) über ein einziges Differentialgetriebe (8) antriebsmäßig verbunden ist, **dadurch gekennzeichnet, dass** zwischen der Wärmekraftmaschine (6) und dem Differentialgetriebe (8) ein Zwischenvorgelege (7) angeordnet ist, wobei sich zwischen der Wärmekraftmaschine (6) und dem Zwischenvorgelege (7) eine erste Kupplung (9) befindet und wobei zwischen dem Zwischenvorgelege (7) und dem Differentialgetriebe (8) eine zweite Kupplung (10) angeordnet ist.

2. Antriebsstrang (1) nach Anspruch 1, **dadurch gekennzeichnet, dass** zwei um die Sekundärachse (4) umlaufende Sekundärräder (4a, 4b) jeweils mit einer ersten elektrischen Maschine (12a) bzw. einer zweiten elektrischen Maschine (12b) antriebsmäßig verbunden sind.

3. Antriebsstrang (1) nach Anspruch 1 oder 2, **dadurch gekennzeichnet, dass** mit jedem Seitenradstrang (5a, 5b) des Fahrzeugs (2) ein mechanischer Traktionsweg (M) verbunden ist, der die Wärmekraftmaschine (6) und das Differentialgetriebe (8) umfasst.

4. Antriebsstrang (1) nach Anspruch 1 bis 3, **dadurch gekennzeichnet, dass** ein elektrischer Traktionsweg (E) die mit dem ersten Radstrang (5a) verbundene erste elektrische Maschine (12a) und die mit dem zweiten Radstrang (5b) verbundene zweite elektrische Maschine (12b) umfasst.

5. Antriebsstrang (1) nach Anspruch 1 bis 4, **dadurch gekennzeichnet, dass** jeder Radstrang (5a, 5b) mindestens zwei Räder (3a, 4a; 3b, 4b), vorzugsweise mindestens drei Räder (3a, 34a 4a, 3b, 34b, 4b), stärker bevorzugt mindestens vier Räder umfasst.

## Revendications

1. Train d'entraînement (1) d'un véhicule tout terrain (2) comprenant deux roues primaires (3a, 3b) mobiles en rotation autour d'un axe primaire (3) et deux roues secondaires (4a, 4b) mobiles en rotation autour d'un axe secondaire (4), les roues primaires (3a, 3b) étant connectées par entraînement à un moteur thermique (6), au moins deux roues (3a, 4a) situées sur un premier côté (A) du véhicule (2) étant synchronisés par un premier train de roues (5a) et au moins deux roues (3a, 4b) situées sur un second côté (B) du véhicule (2) étant synchronisées par un second train de roues (5), ainsi qu'une première machine électrique (12a) connectée par entraînement au premier train de roues (5a) et une seconde machine électrique (12b) connectée au second train de roue (5b), le moteur thermique (6) étant connecté par entraînement aux roues primaires (3a, 3b) par l'intermédiaire d'un engrenage différentiel unique (8),
**caractérisé en ce qu'**
un engrenage de transmission intermédiaire (7) est monté entre le moteur thermique (6) et l'engrenage différentiel (8), un premier embrayage (9) étant positionné entre le moteur thermique (6) et l'engrenage de transmission (7) et un second embrayage (10) étant monté entre l'engrenage de transmission (7) et l'engrenage différentiel (8).

2. Train d'entraînement (1) conforme à la revendication 1,
**caractérisé en ce que**
deux roues secondaires (4a, 4b) mobiles en rotation autour de l'axe secondaire (4) sont respectivement connectées par entraînement à une première machine électrique (12a) et à une seconde machine électrique (12b).

3. Train d'entraînement (1) conforme à la revendication 1 ou b2,
**caractérisé en ce qu'**
une ligne de traction mécanique (M) comprenant le moteur thermique (6) et l'engrenage différentiel (8) est connectée à chaque train de roues latéral (5a, 5b) du véhicule (2).

4. Train d'entraînement (1) conforme à l'une des revendications 1 à 3,
**caractérisé en ce qu'**
une ligne de traction électrique (E) comprend la première machine électrique (12a) connectée au premier train de roues (5a) et la seconde machine électrique (12a) connectée au second train de roues (5b).

5. Train d'entraînement (1) conforme à l'une des revendications 1 à 4,
**caractérisé en ce que**
chaque train de roues (5a, 5b) comprend au moins deux roues (3a, 4a, 3b, 4b), de préférence au moins trois roues (3a, 34a, 4a, 3b, 34b, 4b) et de façon plus préférentielle, au moins quatre roues.
